# EUROPEAN PATENT SPECIFICATION

(11) **EP 4 491 670 B1**
(45) Date of publication and mention of the grant of the patent: **16.09.2026**
(21) Application number: 23766930.4
(22) Date of filing: 09.03.2023
(51) Int. Cl.: C08L 67/02, C08K 3/04, C08K 5/098, C08K 5/20, C08K 7/14, C08L 23/00, C08L 27/18

(54) **POLYETHYLENE TEREPHTHALATE RESIN COMPOSITION AND MOLDED ARTICLE**
POLYETHYLENTEREPHTHALATHARZZUSAMMENSETZUNG UND FORMARTIKEL
COMPOSITION DE RÉSINE DE POLYÉTHYLÈNE TÉRÉPHTALATE ET ARTICLE MOULÉ

(30) Priority: 11.03.2022 JP 2022038163
(43) Date of publication of application: 15.01.2025
(73) Proprietor: Mitsubishi Chemical Corporation, Tokyo 100-8251 (JP)
(72) Inventor: KOBAYASHI, Rina, Hiratsuka-shi, Kanagawa 254-0016 (JP)
(74) Representative: Vossius & Partner Patentanwälte Rechtsanwälte mbB
(86) International application number: PCT/JP2023/009095
(87) International publication number: WO 2023/171754

(56) References cited:
- WO-A1-2011/162145
- CN-A- 104 151 670
- JP-A- 2002 500 237
- JP-A- H05 271 521
- JP-A- H1 129 696
- JP-A- S5 552 341

## Description

### [Technical Field]

The present invention relates to a polyethylene terephthalate resin composition and a molded article, and more specifically relates to a polyethylene terephthalate resin composition and a molded article having excellent weather resistance.

### [Background Art]

Polyethylene terephthalate (hereinafter abbreviated to PET) resin exhibits excellent mechanical characteristics, electrical characteristics, and so on, and also exhibit excellent chemical resistance, heat resistance, and so on, and are therefore widely used as materials for producing a variety of electrical/electronic equipment components, interior and exterior components for vehicles such as automobiles, coaches and electric trains, and other ordinary industrial products. Furthermore, PET resin is also used in components requiring good appearance, such as uncoated exterior components for vehicles, and the scope of use of PET resin is increasing.

Exterior components used outdoors require excellent weather resistance, need to be resistant to fading, need to be unlikely to undergo a decrease in product gloss, require a reinforcing filler not to undergo curling at a surface, and require weather resistance, such as being unlikely to undergo a change in appearance, to be sustained for a long time. In particular, if a component obtained using PET is used outdoors and is exposed to strong sunlight, severe temperature changes, heavy rain, and so on, it is very important for the component to maintain the excellent properties mentioned above over a long period of time.
PTL 1 discloses a polyethylene terephthalate (PET) resin composition which comprises 20 to 80 wt% of polyethylene terephthalate, 60 wt% or less of an inorganic filler, and (C) 0.05 to 10 wt% of a polytetrafluoroethylene resin produced using emulsion polymerization, and exhibits high fluidity, and moreover hardly generates burrs when molded. However, enough consideration was not given to the PET resin composition of PTL 1 in terms of performance required of an exterior component used outdoors, such as weather resistance.
PTL 2 discloses a polyethylene terephthalate resin composition comprising 100 parts by weight of a polyethylene terephthalate resin (A) having an intrinsic viscosity of 0.4 to 0.9, 5 to 200 parts by weight of glass fiber (B) per 100 parts by weight of resin (A), 0.05 to 5 parts by weight of an epoxy compound (C), and 0.05 to 3 parts by weight of a neutral or partially neutralised montan wax salt or montan wax ester salt (D).
PTL 3 provides a flame-retardant polybutylene terephthalate resin composition comprising per 100 parts by mass of (A) polybutylene terephthalate resin (a1) or both polybutylene terephthalate resin (a1) and polyethylene terephthalate resin (a2); (B) 10 to 25 parts by mass halogen-based flame retardant; (C) 5 to 30 parts by mass of flame retardant auxiliary agent; (D) 20 to 100 parts by mass of mineral filler having a moisture content of 20% by mass or more and a dehydration onset temperature of 300°C or higher; (E) 10 to 100 parts by mass of glass fibre reinforcing agent; as essential components.
PTL4 is directed to a high-density polyethylene and PET alloy pipe which is formed by mixing and injection-molding the following components in parts by weight: 100 parts of PE100; 20-50 parts of PET; 5-8 parts compatibilizer; 10-25 parts reinforcing agent; 0.2-1.0 parts processing aid; 0.8-1.5 parts concentrated color masterbatch. The compatibilizer is polyethylene-glycidyl methacrylate, the reinforcing agent is long glass fiber, and the processing aid is soluble polytetrafluoroethylene.

### [Citation List]

### [Patent Literature]

[PTL 1] JP H05(1993)-271521 A
[PTL 2] JP S55-52341 A
[PTL 3] WO 2011/162145 A1
[PTL 4] CN 104151670 A

### [Summary of Invention]

### [Technical Problem]

The object of the present invention is to provide a polyethylene terephthalate resin composition having a high degree of weather resistance.

### [Solution to Problem]

As a result of diligent research carried out in order to overcome the problems mentioned above, the inventors of the present invention have found that a polyethylene terephthalate resin composition obtained by blending specific quantities of a carboxylic acid alkali metal salt, glass fibers and a water-repelling agent with a polyethylene terephthalate resin exhibited excellent weather resistance over a long period of time, and thereby arrived at the present invention.

The present invention is as described in the appended claims.

### [Advantageous Effects of Invention]

The polyethylene terephthalate resin composition of the present invention exhibits excellent weather resistance, has an extremely low change in color (color difference; ΔE*) after a long-term weather resistance test, does not undergo appearance defects such as curling of glass fibers, and exhibits excellent impact resistance. Therefore, the polyethylene terephthalate resin composition of the present invention can be used particularly advantageously as an exterior component to be used outdoors in particular.

### [Description of Embodiments]

The present invention will now be explained in detail.

The polyethylene terephthalate resin composition of the present invention comprises (A) 100 parts by mass of a polyethylene terephthalate resin; (B) 0.1 to 5 parts by mass of a carboxylic acid alkali metal salt; (C) 0.1 to 6 parts by mass of carbon black; (D) 55 parts by mass or more of glass fibers; and (E) 0.01 to 2 parts by mass of a water-repelling agent.

### [(A) Polyethylene terephthalate resin]

The polyethylene terephthalate resin is a polyethylene terephthalate resin in which the ratio (hereinafter refers to as "ET ratio" in some cases) of oxyethyleneoxyterephthaloyl units (hereinafter referred to as "ET units" in some cases) comprising terephthalic acid and ethylene glycol relative to all constituent repeating units is preferably 90 eq% or more, and the polyethylene terephthalate resin in the present invention may contain less than 10 eq% of constituent repeating units other than ET units. The polyethylene terephthalate resin is produced using terephthalic acid or a lower alkyl ester thereof and ethylene glycol as primary raw materials, but other acid components and/or other glycol components may be additionally used as raw materials.

Examples of acid components other than terephthalic acid include dicarboxylic acids and derivatives thereof, such as phthalic acid, isophthalic acid, naphthalenedicarboxylic acid, 4,4'-diphenylsulfonedicarboxylic acid, 4,4'-biphenyldicarboxylic acid, 1,4-cyclohexanedicarboxylic acid, 1,3-phenylenedioxydiacetic acid and structural isomers thereof, malonic acid, succinic acid and adipic acid; and oxyacids and derivatives thereof, such as p-hydroxybenzoic acid and glycolic acid.

In addition, examples of diol components other than ethylene glycol include: aliphatic glycols such as 1,2-propane diol, 1,3-propane diol, 1,4-butane diol, pentamethylene glycol, hexamethylene glycol and neopentyl glycol; alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol and pentacyclododecanedimethanol; and aromatic dihydroxy compound derivatives such as bisphenol A and bisphenol S.

Examples of copolymerized polyethylene terephthalate resins include ethylene glycol/isophthalic acid/terephthalic acid copolymers (isophthalic acid-copolymerized polyethylene terephthalate).

Raw materials including ethylene glycol and terephthalic acid or an ester-forming derivative thereof, such as those mentioned above, undergo an esterification reaction or a transesterification reaction in the presence of an esterification catalyst or a transesterification catalyst to form bis(β-hydroxyethyl)terephthalate and/or an oligomer thereof, which is then subjected to melt polycondensation at a high temperature under reduced pressure in the presence of a polycondensation catalyst and a stabilizer to form a polymer.

There is no particular need to use an esterification catalyst because terephthalic acid serves as an autocatalyst for an esterification reaction. In addition, an esterification reaction can be carried out in the presence of an esterification catalyst and a polycondensation catalyst described later, and can be carried out in the presence of a small quantity of an inorganic acid or the like. A salt of an alkali metal salt such as sodium or lithium, a salt of an alkaline earth metal such as magnesium or calcium, or a compound of a metal such as zinc or manganese can be advantageously used as a transesterification catalyst, but of these, a manganese compound is particularly preferred from the perspective of the appearance of an obtained polyethylene terephthalate.

A compound that is soluble in the reaction system, such as a germanium compound, an antimony compound, a titanium compound, a cobalt compound, a tin compound or an aluminum compound, or a combination of these, is used as a polycondensation catalyst. From perspectives such as color tone and transparency, an antimony catalyst or an aluminum catalyst is particularly preferred as a polycondensation catalyst. A stabilizer may be used in addition to these polycondensation catalysts in order to suppress decomposition reactions during polymerization, and one or two or more phosphorus compounds, such as phosphoric acid esters such as trimethyl phosphate, triethyl phosphate and triphenyl phosphate, phosphorus acid esters such as triphenyl phosphite and trisdodecyl phosphite, methyl acid phosphate, dibutyl phosphate, monobutyl phosphate, acidic phosphoric acid esters, phosphoric acid, phosphorus acid, hypophosphorus acid and polyphosphoric acid, are preferred.

The usage proportion of the catalyst mentioned above is generally 1 to 2000 ppm, and preferably 3 to 500 ppm, in terms of mass of metal in the catalyst relative to all polymerization raw materials, and the usage proportion of the stabilizer is generally 10 to 1000 ppm, and preferably 20 to 200 ppm, in terms of mass of phosphorus atoms in the stabilizer relative to all polymerization raw materials. The catalyst and stabilizer can be supplied at any stage during the esterification reaction or transesterification reaction, or when a raw material slurry is prepared. Furthermore, the catalyst and stabilizer can be supplied during the initial stage of a polycondensation reaction process.

The intrinsic viscosity (IV) of polyethylene terephthalate resins is generally 0.3 to 1.5 dl/g, but the IV value of the polyethylene terephthalate resin (A) used in the present invention is preferably 0.4 to 1.2 dl/g. If the IV value is less than 0.4 dl/g, strength tends to deteriorate, and if the IV value exceeds 1.2 dl/g, fluidity tends to be insufficient. The IV value is more preferably 0.45 to 1.0 dl/g, and further preferably 0.5 to 0.9 dl/g.

Moreover, the intrinsic viscosity of the polyethylene terephthalate resin is a value measured at 30°C in a mixed solvent comprising tetrachloroethane and phenol at a mass ratio of 1:1.

### [(B) Carboxylic acid alkali metal salt]

Examples of carboxylic acids in the carboxylic acid alkali metal salt include saturated aliphatic carboxylic acids, unsaturated aliphatic carboxylic acids, aromatic carboxylic acids, chain-like carboxylic acids and cyclic carboxylic acids. Of these, saturated aliphatic carboxylic acids and aromatic carboxylic acids are preferred from the perspective of achieving a high effect as a crystal nucleating agent. Examples of saturated aliphatic carboxylic acids and aromatic carboxylic acids include montanic acid, behenic acid, stearic acid and benzoic acid, and of these, montanic acid is preferred from the perspectives of achieving a high effect as a crystal nucleating agent, the appearance of a molded article comprising the polyethylene terephthalate resin composition being good, and impact strength being high.

Examples of alkali metals include sodium, lithium and potassium. Of these, sodium is preferred from the perspective of achieving a high effect as a crystal nucleating agent.

A sodium carboxylate is preferred as the carboxylic acid alkali metal salt from the perspectives of achieving a high crystallization temperature-improving effect and improving basic physical properties, and sodium montanate is preferred from the perspectives of the appearance of a molded article being good and impact strength being high.

In the present invention, the crystallization temperature of the carboxylic acid alkali metal salt is preferably 100°C or higher, more preferably 130°C or higher, and further preferably 170°C or higher, and is particularly preferably 210°C or higher from the perspective of achieving a higher effect as a crystal nucleating agent. In addition, the crystallization temperature is preferably 300°C or lower, and more preferably 250°C or lower, and is preferably 230°C or lower from the perspective of the appearance of a molded article being good. The crystallization temperature can be measured on the basis of JIS K7121 using a differential scanning calorimetric measurement apparatus (DSC). More specifically, the temperature is increased from 40°C to 300°C at a temperature increase rate of 20°C/min in a nitrogen atmosphere, a temperature of 300°C is maintained for 3 minutes, the temperature is then lowered to 40°C at a temperature decrease rate of 20°C/min, and the crystallization temperature Tc can be determined as the temperature of the largest peak attributable to crystallization during temperature increase. A "DSC7020" produced by Hitachi High-Technologies can be used as the differential scanning calorimetric measurement apparatus.

The content of the carboxylic acid alkali metal salt (B) is 0.1 to 5 parts by mass relative to 100 parts by mass of the polyethylene terephthalate resin (A). If this content falls within such a range, strength can be improved. This content is preferably 0.2 parts by mass or more, and more preferably 0.3 parts by mass or more, and is preferably 4 parts by mass or less, and more preferably 3 parts by mass or less, and within this range is preferably 2 parts by mass or less, 1.5 parts by mass or less, 1 part by mass or less, 0.8 parts by mass or less, 0.6 parts by mass or less, and especially 0.5 parts by mass or less.

### [(C) Carbon black]

The polyethylene terephthalate resin composition of the present invention contains carbon black.

By incorporating carbon black, the weather resistance and appearance of the polyethylene terephthalate resin composition and molded article are improved.

The carbon black is not limited in terms of type, raw material or production method, and it is possible to use furnace black, channel black, acetylene black, ketjen black, or the like. The number average particle diameter of the carbon black is not particularly limited, but is preferably 5 to 60 nm. By using carbon black having a number average particle diameter that falls within this prescribed range, it is possible to obtain a composition that is unlikely to undergo blistering at high temperatures.

Moreover, the number average particle diameter can be determined by acquiring an aggregated enlarged image using a procedure described in ASTM D3849 specifications (Standard Test Method for Carbon Black - Morphological Characterization of Carbon Black Using Electron Microscopy), measuring diameters of 3000 particles as unit constituent particles from the aggregated image, and taking the arithmetic mean of these diameters to be the number average particle diameter.

In general, the nitrogen adsorption specific surface area (units: m²/g) of the carbon black is preferably less than 1000 m²/g, and within this range is preferably 50 to 400 m²/g. Setting the nitrogen adsorption specific surface area to be less than 1000 m²/g is preferred from the perspective that the fluidity of the polyethylene terephthalate resin composition and the appearance of the molded article tend to improve.

Moreover, nitrogen adsorption specific surface area can be measured in accordance with JIS K6217.

In addition, the DBP (dibutyl phthalate) oil absorption amount of the carbon black is preferably less than 300 cm³/100 g, and within this range is preferably 30 to 200 cm³/100 g, and more preferably 40 to 80 cm³/100 g. Setting the DBP absorption amount to be less than 300 cm³/100 g is preferred from the perspective that the fluidity of the polyethylene terephthalate resin composition of the present invention and the appearance of the molded article tend to improve.

Moreover, the DBP absorption amount (units: cm³/100 g) can be measured in accordance with JIS K6217.

In addition, the carbon black used in the present invention is not particularly limited in terms of pH, but this is generally 2 to 10, preferably 3 to 9, and more preferably 4 to 8.

It is possible to use one type of carbon black in isolation or a combination of two or more types thereof. Furthermore, the carbon black can be granulated by using a binder, and can be used as a master batch obtained by melt kneading at a high concentration in another resin. By using a melt kneaded master batch, it is possible to improve handleability at the time of extrusion, improve dispersibility in the resin composition, improve weather resistance and improve basic physical properties and so on. Examples of the resin mentioned above include polystyrene resins, polyester resins, acrylic resins and polyolefin resins, and of these, polyester resins are preferred, and of these, polyethylene terephthalate resins are most preferred.

The content of the carbon black in the master batch is preferably 10 to 80 mass%, more preferably 20 to 70 mass%, and further preferably 25 to 50 mass%.

The content of carbon black is 0.01 to 6 parts by mass relative to 100 parts by mass of the polyethylene terephthalate resin (A). By incorporating the carbon black at such a quantity, discoloration following a weather resistance test is suppressed and appearance is improved. This content is preferably 0.1 parts by mass or more, and more preferably 0.3 parts by mass or more, and within this range is preferably 0.5 parts by mass or more and especially 0.7 parts by mass or more, and is preferably 5 parts by mass or less, and more preferably 3 parts by mass or less, and within this range is preferably 1.5 parts by mass or less, and especially 1 part by mass or less.

### [(D) Glass fibers]

The polyethylene terephthalate resin composition of the present invention contains glass fibers.

Regardless of the form of glass fibers at the time of blending, such as chopped strands, roving glass or a (long fiber) master batch of a thermoplastic resin and glass fibers, any type of well-known glass fibers can be used as the glass fibers, such as A-glass, E-glass, and zirconia component-containing alkali-resistant glass compositions. Of these, the glass fibers used in the present invention are preferably an alkali-free glass (E-glass) from the perspective of improving the thermal stability of the polyethylene terephthalate resin composition of the present invention.

The number average fiber length of the glass fibers is not particularly limited, but is preferably 1 mm or more and 10 mm or less, more preferably 1.5 to 6 mm, and further preferably 2 to 5 mm.

If this number average fiber length exceeds 10 mm, the glass fibers tend to drop from the surface of the molded article, and productivity tends to deteriorate. If this number average fiber length is less than 1 mm, the aspect ratio of the glass fibers is low, meaning that an improvement in mechanical strength tends to be insufficient.

The diameter of the glass fibers is preferably 3 to 20 µm. These glass fibers can be produced in accordance with any well-known conventional method by pulverizing glass fiber strands using a hammer mill or a ball mill in particular. If the diameter of the glass fibers is less than 3 µm, an improvement in mechanical strength is insufficient, and if this diameter exceeds 20 µm, appearance tends to deteriorate. The diameter of the glass fibers is more preferably 5 to 15 µm, and further preferably 6 to 14 µm.

The glass fibers can be surface treated with a silane coupling agent such as an aminosilane or an epoxysilane in order to improve adhesion to the polyethylene terephthalate resin.

In general, the glass fibers are preferably used as chopped strands (chopped glass fibers) obtained by bundling these fibers into many bundles and then cutting to a prescribed length, and in such a case, it is preferable to blend a sizing agent with the glass fibers being used. By blending a sizing agent, it is possible to achieve good mechanical properties in addition to the advantage of increased production stability of the molded article.

The sizing agent is not particularly limited, but examples thereof include urethane, epoxy and acrylic sizing agents. Of these, urethane and epoxy sizing agents are more preferred, and epoxy sizing agents are further preferred.

The cut length of the chopped strands (chopped glass fibers) is not particularly limited, but is generally 1 to 10 mm, preferably 1.5 to 6 mm, and more preferably 2 to 5 mm.

The glass fibers may be fibers in which the fiber cross section is substantially circular, and more specifically glass fibers having a substantially circular cross section in which the ellipticity (long diameter/short diameter) of the fiber cross section is not less than 1 and less than 1.5. In this case, the ellipticity is preferably 1 to 1.4, more preferably 1 to 1.2, and particularly preferably 1 to 1.1.

In addition, it is preferable for the glass fibers to be glass fibers in which the cross sectional shape is flat from the perspective of fluidity, and specific examples thereof include glass fibers having a flat cross section in which the average long diameter of the fiber cross section is 10 to 50 µm and the average value of the ratio of the long diameter and the short diameter (long diameter/short diameter) is 1.5 or more and 8 or less.

The glass fibers are preferably so-called milled glass fibers, and more specifically, milled glass fibers are obtained by pulverizing chopped strands of glass fibers, which are obtained by cutting, to a prescribed length, glass fiber strands obtained by bundling several tens to several thousands of individual glass fibers (filaments). In this case, the chopped strands of glass fibers are preferably surface treated with a sizing agent, as mentioned above.

The milled glass fibers are preferably short fibers having a ratio of average fiber length relative to average fiber diameter (aspect ratio) of 10 or less. The aspect ratio of the milled glass fibers is preferably 8 or less, and more preferably 7 or less, and is preferably 2.5 or more, and more preferably 3 or more. If this aspect ratio exceeds 10, warpage and anisotropy increase and molded article appearance tends to deteriorate.

In addition, the number average fiber diameter of the milled glass fibers is preferably 1 to 25 µm, and more preferably 5 to 17 µm, and the average length is preferably 1 to 500 µm, more preferably 10 to 300 µm, and further preferably 20 to 200 µm. In the case of milled glass fibers of short fibers having an average fiber diameter of less than 1 µm, molding processing properties tend to deteriorate, and if the average fiber diameter exceeds 25 µm, appearance tends to deteriorate and a reinforcing effect tends to be insufficient.

The content of the glass fibers is preferably 55 parts by mass relative or more to 100 parts by mass of the polyethylene terephthalate resin (A). If this content is 55 parts by mass or more, strength can be improved. The content of the glass fibers is preferably 60 parts by mass or more, more preferably 70 parts by mass or more, and particularly preferably 80 parts by mass or more, and is preferably 150 parts by mass or less, and within this range, is preferably 140 parts by mass or less, 130 parts by mass or less, 120 parts by mass or less, 110 parts by mass or less, and especially 100 parts by mass or less.

### [(E) Water-repelling agent]

The polyethylene terephthalate resin composition of the present invention contains a water-repelling agent (E). It is preferable to incorporate a water-repelling agent having a critical surface tension of 40 mN/m or less as the water-repelling agent from the perspective of further improving weather resistance. As the critical surface tension decreases, the water repellency of the water-repelling agent increases and it is found that the weather resistance of a polyethylene terephthalate resin composition containing the water-repelling agent improves.

In general, when a droplet of a liquid is dripped onto a surface of an object, the critical surface tension of the object is taken to be the surface tension of the liquid at which the contact angle θ (the angle that the droplet makes at the interface with the surface of the object) is 0°. Therefore, the critical surface tension of the water-repelling agent is the surface tension of a liquid at which the contact angle θ of a liquid dripped onto the surface of a molded article formed from the water-repelling agent is 0° (θ=0). Moreover, the molded article may be in the form of a film.

For example, the molded article is conditioned by being left for 24 hours in a constant temperature chamber at a temperature of 23°C and a relative humidity of 60% RH, the contact angle θ with a plurality of liquids having different surface tensions is measured using a contact angle meter (a DropMaster DM500 produced by Kyowa Interface Science Co., Ltd.), a Zisman plot is prepared, and the value at which cosθ=1 (θ=0°), that is, the critical surface tension, can be determined.

If the critical surface tension of the water-repelling agent (E) is 40 mN/m or less, the contact angle θ of the water-repelling agent increases and the water-repelling effect increases, and this is thought to be the reason why weather resistance improves.

A preferred example of the water-repelling agent (E) is a silicone-containing water-repelling agent, and a water-repelling agent comprising a composition containing a silicone resin in a resin that serves as a base is particularly preferred. Examples of the silicone resin include organopolysiloxanes, dimethylpolysiloxane, methylphenylpolysiloxane and methylhydrogenpolysiloxane, and of these, dimethylpolysiloxane can be advantageously used. Preferred examples of the resin that serves as a base include thermoplastic resins, for example a variety of polyolefin resins such as low density polyethylene, high density polyethylene and polypropylene.

Polytetrafluoroethylene is particularly preferred as the water-repelling agent (E).

Polytetrafluoroethylene having fibril-forming ability is preferred. Fibrillated polytetrafluoroethylene achieves a high weather resistance improvement effect, and can improve impact resistance by exhibiting a reinforcing effect.

In the polytetrafluoroethylene, a variety of fluorine-containing olefins, such as hexafluoropropylene, chlorotrifluoroethylene, fluoroalkylethylenes and perfluoroalkyl vinyl ethers, and fluorine-containing alkyl (meth)acrylates such as perfluoroalkyl (meth)acrylates can be used as copolymer components. The content of such copolymer components is preferably 10 mass% or less relative to the total amount of tetrafluoroethylene in the polytetrafluoroethylene.

There are two methods for producing polytetrafluoroethylene, namely suspension polymerization and emulsion polymerization, and among products produced by suspension polymerization and products produced by emulsion polymerization, products produced by suspension polymerization are preferred because polytetrafluoroethylene is unlikely to aggregate at the time of extrusion and a decrease in impact resistance caused by said aggregation is unlikely to occur.

In addition, an organic polymer-coated polytetrafluoroethylene can also be used as the polytetrafluoroethylene. The organic polymer-coated polytetrafluoroethylene (also referred to as a polytetrafluoroethylene-organic polymer coated product) can be produced using a variety of well-known methods, examples of which include (i) a method comprising mixing an aqueous dispersion of polytetrafluoroethylene particles and an aqueous dispersion of organic polymer particles, and then forming a powder by means of coagulation or spray drying, (ii) a method comprising polymerizing a monomer that constitutes an organic polymer in the presence of an aqueous dispersion of polytetrafluoroethylene particles, and then forming a powder by means of coagulation or spray drying, and (iii) a method comprising emulsion polymerization of a monomer having an ethylenically unsaturated bond in a mixed liquid obtained by mixing an aqueous dispersion of polytetrafluoroethylene particles and an aqueous dispersion of organic polymer particles, and then forming a powder by means of coagulation or spray drying.

Examples of the organic polymer that coats the polytetrafluoroethylene include polymers and elastomers comprising one or two or more monomers such as styrene, an alkyl (meth)acrylate and acrylonitrile.

However, polytetrafluoroethylene that has not been coated with an organic polymer is preferred as the polytetrafluoroethylene from the perspective of achieving a high impact resistance improvement effect.

It is preferable for the D_{[3,2]} particle diameter of the polytetrafluoroethylene to fall within the range 0.01 to 300 µm from the perspective of suppressing a decrease in impact resistance caused by aggregation of the polytetrafluoroethylene because the dispersibility of the polytetrafluoroethylene increases, and this particle diameter is more preferably 0.1 µm or more, further preferably 1 µm or more, yet more preferably 10 µm or more, and yet more preferably 12 µm or more, and is preferably 200 µm or less, and more preferably 100 µm or less, and within this range, is preferably 40 µm or less, and especially 30 µm or less or even 20 µm or less.

In the present invention, the D_{[3,2]} particle diameter of the polytetrafluoroethylene is the D_{[3,2]} particle diameter of a raw material prior to melt kneading.

The polytetrafluoroethylene may be a single type or a combination of two or more arbitrary types thereof combined at arbitrary proportions.

Relative to 100 parts by mass of the polyethylene terephthalate resin (A), the content of the water-repelling agent (E) is 0.01 to 2 parts by mass, preferably 0.03 parts by mass or more, more preferably 0.05 parts by mass or more, and particularly preferably 0.08 parts by mass or more, and is preferably 1.5 parts by mass or less, and within this range is preferably 1 part by mass or less, 0.8 parts by mass or less, 0.5 parts by mass or less, and especially 0.4 parts by mass or less.

In addition, the ratio of the content of the water-repelling agent (E) and the content of the carboxylic acid alkali metal salt (B) is such that water-repelling agent (E)/carboxylic acid alkali metal salt (B) ratio is 0.01 or more, preferably 0.1 or more, and more preferably 0.2 or more from the perspective of improving hydrolysis resistance, and is 5 or less, preferably 2 or less, and more preferably 1.3 or less from the perspective of improving the appearance of a molded article.

### [Stabilizer]

It is preferable for the polyethylene terephthalate resin composition of the present invention to contain a stabilizer from the perspectives of preventing a deterioration in color hue, further improving thermal stability and preventing a decrease in mechanical strength.

Phosphorus-containing stabilizers and phenol-containing stabilizers are preferred as the stabilizer.

Examples of phosphorus-containing stabilizers include phosphorus acid, phosphoric acid, phosphorus acid esters and phosphoric acid esters, and of these, organic phosphate compounds, organic phosphite compounds and organic phosphonite compounds are preferred.

A preferred organic phosphate compound is a compound represented by the general formula below:

(R¹O))₃₋ₙP(=O)OHₙ

(In the formula, R¹ denotes an alkyl group or an aryl group, and multiple R¹ groups may be the same as, or different from, each other. n denotes an integer between 0 and 2) or a metal salt thereof. A more preferred example of an organic phosphate compound is a long chain alkyl acid phosphate compound in which R¹ has 8 to 30 carbon atoms. Specific examples of alkyl groups having 8 to 30 carbon atoms include octyl groups, 2-ethylhexyl groups, isooctyl groups, nonyl groups, isononyl groups, decyl groups, isodecyl groups, dodecyl groups, tridecyl groups, isotridecyl groups, tetradecyl groups, hexadecyl groups, octadecyl groups, eicosyl groups and triacontyl groups. Examples of metal salts include salts of alkaline earth metals, zinc, lead and tin, with zinc salts being particularly preferred.

Examples of long chain alkyl acid phosphate compounds include octyl acid phosphate, 2-ethylhexyl acid phosphate, decyl acid phosphate, lauryl acid phosphate, octadecyl acid phosphate, oleyl acid phosphate, behenyl acid phosphate, phenyl acid phosphate, nonylphenyl acid phosphate, cyclohexyl acid phosphate, phenoxyethyl acid phosphate, alkoxy polyethylene glycol acid phosphates, bisphenol A acid phosphate, dimethyl acid phosphate, diethyl acid phosphate, dipropyl acid phosphate, diisopropyl acid phosphate, dibutyl acid phosphate, dioctyl acid phosphate, di-2-ethylhexyl acid phosphate, dioctyl acid phosphate, dilauryl acid phosphate, distearyl acid phosphate, diphenyl acid phosphate, bisnonylphenyl acid phosphate and metal salts of these. Of these, octadecyl acid phosphate is preferred, and this is commercially available as, for example, Adekastab AX-71 produced by Adeka Corp. (octadecyl acid phosphate) and JP-518Zn produced by Johoku Chemical Co., Ltd. (a Zn salt of octadecyl acid phosphate).

A preferred organic phosphite compound is a compound represented by the general formula below:

R²O-P(OR³)(OR⁴)

(In the formula, R², R³ and R⁴ are each a hydrogen atom, an alkyl group having 1 to 30 carbon atoms or an aryl group having 6 to 30 carbon atoms, and at least one of R², R³ and R⁴ is an aryl group having 6 to 30 carbon atoms.)

Examples of organic phosphite compounds include triphenyl phosphite, tris(nonylphenyl) phosphite, dilauryl hydrogen phosphite, triethyl phosphite, tridecyl phosphite, tris(2-ethylhexyl) phosphite, tris(tridecyl) phosphite, tristearyl phosphite, diphenylmonodecyl phosphite, monophenyldidecyl phosphite, diphenylmono(tridecyl) phosphite, tetraphenyldipropylene glycol diphosphite, tetraphenyltetra(tridecyl)pentaerythritol tetraphosphite, hydrogenated bisphenol A phenyl phosphite polymers, diphenyl hydrogen phosphite, 4,4'-butylidene-bis(3-methyl-6-tert-butylphenyldi(tridecyl) phosphite), tetra(tridecyl)4,4'-isopropylidene diphenyl diphosphite, bis(tridecyl)pentaerythritol diphosphite, bis(nonylphenyl)pentaerythritol diphosphite, dilaurylpentaerythritol diphosphite, distearylpentaerythritol diphosphite, tris(4-tert-butylphenyl) phosphite, tris(2,4-di-tert-butylphenyl) phosphite, hydrogenated bisphenol A pentaerythritol phosphite polymers, bis(2,4-di-tert-butylphenyl)pentaerythritol diphosphite, bis(2,6-di-tert-butyl-4-methylphenyl)pentaerythritol diphosphite, 2,2'-methylene-bis(4,6-di-tert-butylphenyl)octyl phosphite and bis(2,4-dicumylphenyl)pentaerythritol diphosphite. Of these, bis(2,6-di-tert-butyl-4-methylphenyl)pentaerythritol diphosphite is preferred, and this is commercially available as, for example, PEP-36 produced by Adeka Corp.

A preferred organic phosphonite compound is a compound represented by the general formula below:

R⁵-P(OR⁶)(OR⁷)

(In the formula, R⁵, R⁶ and R⁷ are each a hydrogen atom, an alkyl group having 1 to 30 carbon atoms or an aryl group having 6 to 30 carbon atoms, and at least one of R⁵, R⁶ and R⁷ is an aryl group having 6 to 30 carbon atoms.)

In addition, examples of organic phosphonite compounds include tetrakis(2,4-di-iso-propylphenyl)-4,4'-biphenylene diphosphonite, tetrakis(2,4-di-n-butylphenyl)-4,4'-biphenylene diphosphonite, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-iso-propylphenyl)-4,4'-biphenylene diphosphonite, tetrakis(2,6-di-n-butylphenyl)-4,4'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite and tetrakis(2,6-di-tert-butylphenyl)-3,3'-biphenylene diphosphonite.

Examples of phenol-containing stabilizers include pentaerythritol tetrakis(3-(3,5-di-t-butyl-4-hydroxyphenyl)propionate), octadecyl-3-(3,5-di-tert-butyl-4-hydroxyphenyl)propionate, thiodiethylene bis(3-(3,5-di-tert-butyl-4-hydroxyphenyl)propionate), and pentaerythritol tetrakis(3-(3,5-di-neopentyl-4-hydroxyphenyl)propionate).

Of these, pentaerythritol tetrakis[3-(3,5-di-tert-butyl-4-hydroxyphenyl)propionate] and octadecyl-3-(3,5-di-tert-butyl-4-hydroxyphenyl)propionate are preferred. Specific examples of this type of phenol-based antioxidant include the products "Irganox 1010" and "Irganox 1076" manufactured by BASF and the products "Adekastab AO-50" and "Adekastab AO-60" manufactured by ADEKA.

It is possible to incorporate one stabilizer or an arbitrary combination of two or more types thereof combined at arbitrary proportions.

The content of the stabilizer is preferably 0.001 to 1 part by mass relative to 100 parts by mass of the polyethylene terephthalate resin (A). If the content of the stabilizer is less than 0.001 parts by mass, an improvement in the thermal stability and compatibility of the resin composition can hardly be expected and a decrease in molecular weight and a deterioration in color tone readily occur when the composition is molded, and if the content of the stabilizer exceeds 1 part by mass, the quantity thereof becomes excessive, silvering occurs, and a deterioration in color tone readily occurs. The content of the stabilizer is more preferably 0.001 to 0.7 parts by mass, and further preferably 0.005 to 0.6 parts by mass.

### [Mold-release agent]

The polyethylene terephthalate resin composition of the present invention preferably contains a mold-release agent.

Known mold-release agents that are commonly used for polyester resins may be used as the mold-release agent, but examples of these include aliphatic carboxylic acid amides, polyolefin compounds and fatty acid ester compounds. Among these mold-release agents, polyolefin compounds and aliphatic carboxylic acid amides are preferred, and aliphatic carboxylic acid amides are particularly preferred from the perspectives of exhibiting good mold release properties and undergoing little discoloration following a weather resistance test.

Examples of polyolefin compounds include compounds selected from among paraffin waxes and polyethylene waxes, and of these, compounds having weight average molecular weights of 700 to 10000, and especially 900 to 8000, are preferred.

Examples of fatty acid ester compounds include fatty acid esters, such as esters of saturated or unsaturated monovalent or divalent aliphatic carboxylic acids, glycerin fatty acid esters and sorbitan fatty acid esters, and partially saponified products thereof. Of these, mono- and di-fatty acid esters constituted from fatty acids and alcohols having 11 to 28 carbon atoms, and preferably 17 to 21 carbon atoms, are preferred.

Examples of fatty acids include palmitic acid, stearic acid, caproic acid, capric acid, lauric acid, arachic acid, behenic acid, lignoceric acid, cerotic acid, melissic acid, tetratriacontanoic acid, montanic acid, adipic acid and azelaic acid. In addition, fatty acids may be alicyclic.

Saturated and unsaturated monohydric and polyhydric alcohols can be used as the alcohol. These alcohols may have substituent groups such as fluorine atoms or aryl groups. Of these, monohydric and polyhydric saturated alcohols having 30 or fewer carbon atoms are preferred, and aliphatic saturated monohydric and polyhydric alcohols having 30 or fewer carbon atoms are more preferred. Here, aliphatic compounds also include alicyclic compounds.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane and dipentaerythritol.

The ester compounds mentioned above may contain aliphatic carboxylic acids and/or alcohols as impurities, and may be a mixture of a plurality of compounds.

Specific examples of the fatty acid ester-containing compound include glycerol monostearate, glycerol monobehenate, glycerol dibehenate, glycerol-12-hydroxymonostearate, sorbitan monobehenate, pentaerythritol monostearate, pentaerythritol distearate, stearyl stearate and ethylene glycol montanic acid esters.

Examples of aliphatic carboxylic acid amides include compounds obtained by subjecting a diamine and a higher aliphatic monocarboxylic acid and/or a polybasic acid to a dehydration reaction.

Saturated aliphatic monocarboxylic acids and hydroxycarboxylic acids having 16 or more carbon atoms are preferred as the higher aliphatic monocarboxylic acid, examples of which include palmitic acid, stearic acid, behenic acid, montanic acid and 12-hydroxystearic acid.

Examples of polybasic acids include aliphatic dicarboxylic acids such as malonic acid, succinic acid, adipic acid, sebacic acid, pimelic acid and azelaic acid; aromatic dicarboxylic acids such as phthalic acid and terephthalic acid; and alicyclic dicarboxylic acids such as cyclohexanedicarboxylic acid and cyclohexylsuccinic acid.

Examples of diamines include ethylenediamine, 1,3-diaminopropane, 1,4-diaminobutane, hexamethylenediamine, meta-xylylenediamine, tolylenediamine, para-xylylenediamine, phenylenediamine and isophoronediamine.

A compound obtained by subjecting stearic acid, sebacic acid and ethylenediamine to polycondensation is preferred as a carboxylic acid amide compound, and a compound obtained by subjecting 2 moles of stearic acid, 1 mole of sebacic acid and 2 moles of ethylenediamine to polycondensation is more preferred. In addition, a bisamide compound obtained by reacting an aliphatic carboxylic acid with a diamine, such as N,N'-methylene bisstearamide or N,N'-ethylene bisstearamide, and a dicarboxylic acid amide compound such as N,N'-dioctadecylterephthalic acid amide can also be advantageously used.

The content of the mold-release agent is preferably 0.1 to 3 parts by mass, more preferably 0.2 to 2.5 parts by mass, and further preferably 0.5 to 2 parts by mass, relative to 100 parts by mass of the polyethylene terephthalate resin (A). If this content is less than 0.1 parts by mass, surface properties tend to deteriorate as a result of release defects during melt processing, but if this content exceeds 3 parts by mass, the kneading workability of the resin composition tends to deteriorate and the appearance of a molded article tends to deteriorate.

### [Epoxy compound]

The polyethylene terephthalate resin composition of the present invention preferably contains an epoxy compound.

The epoxy compound should have one or more epoxy groups per molecule, and a glycidyl compound that is a product of a reaction between epichlorohydrin and an alcohol, phenol compound or carboxylic acid, or the like, or a compound obtained by epoxidation of an olefinic double bond should generally be used.

Known compounds that are routinely used in polyester resins can be used as the epoxy compound, but examples of these include bisphenol A type epoxy compounds, novolac type epoxy compounds, bisphenol F type epoxy compounds, alicyclic epoxy compounds, glycidyl ethers, glycidyl esters, epoxidized butadiene polymers and resorcin epoxy type compounds. Of these epoxy compounds, a bisphenol A type epoxy compound is preferred.

Examples of bisphenol A type epoxy compounds include bisphenol A diglycidyl ether and hydrogenated bisphenol A diglycidyl ether, and examples of bisphenol F type epoxy compounds include bisphenol F diglycidyl ether and hydrogenated bisphenol F diglycidyl ether.

Examples of novolac epoxy compounds include phenol novolac epoxy compounds and cresol novolac epoxy compounds.

Examples of alicyclic epoxy compounds include vinylcyclohexene oxide, dicyclopentadiene oxide, 3,4-epoxycyclohexyl-3,4-cyclohexyl carboxylate, bis(3,4-epoxycyclohexylmethyl) adipate, vinylcyclohexene diepoxide and 3,4-epoxycyclohexyl glycidyl ether.

Examples of glycidyl ether compounds include monoglycidyl ether compounds such as methyl glycidyl ether, butyl glycidyl ether, 2-ethylhexyl glycidyl ether, decyl glycidyl ether, stearyl glycidyl ether, phenyl glycidyl ether, butylphenyl glycidyl ether and allyl glycidyl ether; and diglycidyl ether compounds such as neopentyl glycol diglycidyl ether, ethylene glycol diglycidyl ether, glycerin diglycidyl ether, propylene glycol diglycidyl ether and bisphenol A diglycidyl ether.

Examples of glycidyl ester compounds include monoglycidyl ester compounds such as glycidyl benzoic acid esters and glycidyl sorbic acid esters; and diglycidyl ester compounds such as diglycidyl adipic acid esters, diglycidyl terephthalic acid esters, diglycidyl orthophthalic acid esters.

Examples of epoxidized butadiene polymers include epoxidized polybutadienes, epoxidized styrene-butadiene copolymers and epoxidized hydrogenated styrene-butadiene copolymers.

Examples of resorcin epoxy compounds include resorcin diglycidyl ether.

In addition, the epoxy compound may be a copolymer comprising a glycidyl group-containing compound as one component. Examples thereof include copolymers of glycidyl esters of α,β-unsaturated acids and one or two or more monomers selected from the group consisting of α-olefins, acrylic acid, acrylic acid esters, methacrylic acid and methacrylic acid esters.

In addition, an epoxy compound having an epoxy equivalent weight of 50 to 10,000 g/eq and a weight average molecular weight 8000 or less is preferred as the epoxy compound. If the epoxy equivalent weight is less than 50 g/eq, the viscosity of the resin composition increases because the amount of epoxy groups is too high, but if the epoxy equivalent weight exceeds 10,000 g/eq, the amount of epoxy groups is few, meaning that it tends to be difficult to adequately achieve the effect of improving the hydrolysis resistance of the polyethylene terephthalate resin composition. This epoxy equivalent weight is preferably 100 g/eq or more, more preferably 120 g/eq or more, further preferably 150 g/eq or more, and most preferably 170 g/eq or more. This epoxy equivalent weight is 7000 g/eq or less, more preferably 5000 g/eq or less, further preferably 1000 g/eq or less, further preferably 500 g/eq or less, further preferably 300 g/eq or less, and most preferably 200 g/eq or less. In addition, if the weight average molecular weight exceeds 8000, compatibility with the polyethylene terephthalate resin decreases and the mechanical strength of a molded article tends to deteriorate. The weight average molecular weight is more preferably 7000 or less, further preferably 6000 or less, further preferably 3000 or less, further preferably 1000 or less, further preferably 500 or less, and most preferably 400 or less.

A bisphenol A type epoxy compound or novolac type epoxy compound obtained by reacting epichlorohydrin with bisphenol A or novolac is preferred as the epoxy compound. Of these, a bisphenol A type epoxy compound is particularly preferred from the perspectives of hydrolysis resistance, discoloration following a weather resistance test, and surface appearance of a molded article.

In a case where the composition contains an epoxy compound, the content of the epoxy compound is, relative to 100 parts by mass of the polyethylene terephthalate resin (A), preferably 0.1 to 4 parts by mass, and more preferably 0.2 parts by mass or more, and within this range is preferably 0.3 parts by mass or more, 0.4 parts by mass or more, 0.5 parts by mass or more, and most preferably 0.6 parts by mass or more. In addition, the content of the epoxy compound is preferably 3.5 parts by mass or less, and more preferably 3 parts by mass or less, and within this range is preferably 2.0 parts by mass or less and especially 1.0 parts by mass or less. It is preferable for the content of the epoxy compound to be 0.1 parts by mass or more from the perspective of improving the mechanical strength of a molded article. Crosslinking tends to progress and flowability during molding tends to deteriorate if the content of the epoxy compound exceeds 4 parts by mass.

Furthermore, the equivalence ratio of epoxy groups in the epoxy compound relative to terminal COOH groups in the polyethylene terephthalate resin (A) (epoxy groups / COOH groups) preferably falls within the range 0.2 to 2.7. Hydrolysis resistance tends to deteriorate if this equivalence ratio is lower than 0.2, and molding properties tend to become unstable if this equivalence ratio exceeds 2.7. The epoxy group / COOH group ratio is more preferably 0.3 or more and 2.5 or less.

### [Other components]

If necessary, the polyethylene terephthalate resin composition of the present invention can contain resin additives other than those mentioned above as long as the advantageous effect of the present invention is not impaired. Examples of other resin additives include ultraviolet radiation absorbers, pigments other than carbon black, lubricants, catalyst deactivators, anti-static agents, foaming agents, plasticizers, flame retardants and auxiliary flame retardants.

If necessary, the polyethylene terephthalate resin composition of the present invention can contain resins other than those mentioned above, such as other thermoplastic resins, as long as the advantageous effect of the present invention is not impaired. Examples of other thermoplastic resins include polybutylene terephthalate resins, polyamide resins, polyacetal resins, polyphenylene oxide resins, polyphenylene sulfide resins, liquid crystal polyester resins and acrylic resins. It is possible to use one of these other resins, or two or more types thereof.

However, in a case where the composition contains another resin other than other than an above-mentioned resin that is an essential component, the content thereof is, relative to 100 parts by mass of the polyethylene terephthalate (A), preferably 30 parts by mass or less, more preferably 25 parts by mass or less, and further preferably 20 parts by mass or less, and within this range is preferably 10 parts by mass or less, and especially 5 parts by mass or less, and is most preferably 2 parts by mass or less.

### [Production of polyethylene terephthalate resin composition]

Production of the polyethylene terephthalate resin composition is not limited to a specific method, but the essential components mentioned above and other components that are blended according to need are mixed and then melt kneaded.

From the perspective of mechanical properties such as carbon black dispersibility, fading of a molded article following a weather resistance test, tensile strength, bending strength and Charpy impact strength, when the carbon black (C) is blended, it is preferable to blend the polyethylene terephthalate resin (A) with a coloring agent composition that contains the polyethylene terephthalate resin (A) and the carbon black (C), that is, a master batch.

Examples of melt kneading methods include a method comprising homogeneously mixing the essential components mentioned above and other components that are blended according to need using a Henschel mixer, a ribbon blender, a V type blender, a tumbler, or the like, and then melt kneading using a single screw or multi-screw kneading extruder, a roller, a Banbury mixer, a Labo Plastomill (a Brabender), or the like. The temperature at the time of melt kneading is preferably 200 to 300°C, and more preferably 220 to 290°C.

In addition, in a case where production is carried out using an extruder, it is preferable for the extruder to have two or more vents from the perspective of mechanical properties of a molded article, such as tensile strength, bending strength, Charpy impact strength, and so on.

It is preferable for the crystallization and temperature of the polyethylene terephthalate resin composition of the present invention to be 200 to 230°C from the perspectives of a molded article having good appearance and mechanical properties. It is particularly preferable for this temperature to be 207 to 210°C.

### [Molded article]

A method for producing a molded article using the polyethylene terephthalate resin composition described above can be any molding method commonly used for polyethylene terephthalate resin compositions, examples of which include injection molding methods, ultra-high speed injection molding methods, injection compression molding methods, two-color molding methods, blow molding methods such as gas-assisted methods, molding methods that use heat insulating molds, molding methods that use rapidly heated molds, insert molding methods, IMC (in-mold coating) molding methods, extrusion molding methods and sheet molding methods, but injection molding methods are particularly preferred.

Examples of molded articles include injection molded articles, extrusion molded articles, sheets, pipes and various films. The shape, size, thickness, and so on, of these molded articles are arbitrary.

It is preferable for a surface of the molded article to have a contact angle with water of 80° or more. If the contact angle is 80° or more, a greater water-repelling effect is achieved and weather resistance improves.

The molded article can be used as an electrical/electronic component, a motor vehicle component, another type of electrical component, a mechanical component, or a domestic appliance component. In addition, the polyethylene terephthalate resin composition of the present invention exhibits excellent weather resistance and also exhibits excellent impact resistance and appearance, and can therefore be advantageously used in products used outdoors, and especially exterior components for motor vehicles, such as glazing, outer handles, door mirror stays, fenders, garnishes, bumpers and roof rails.

### [Examples]

The present invention will now be explained in greater detail through the use of examples and comparative examples, but the present invention should not be interpreted as being limited to the examples described below.

Raw materials used in the examples and comparative examples below are as shown in Tables 1 and 2 below.

**[Table 1]**

| | | |
|---|---|---|
| (A) PET | A1 | Novapet PBK1 by Mitsubishi Chemical Corp. |
| | | Intrinsic viscosity: 0.64 dl/g |
| | A2 | H3HPC by Indorama |
| | | Intrinsic viscosity: 0.73 dl/g |
| (B) Carboxylic acid alkali salt | B1 | Sodium montanate; NS-8 by Nitto Kasei Co.. |
| | | Metal content: 5.0-6.0%; crystallization temp.: 221°C |
| | B2 | Lithium montanate; LS-8 by Nitto Kasei Co. |
| | | Metal content: 1.0-2.0%; crystallization temp.: 192°C |
| | B3 | Potassium montanate; KS-8 by Nitto Kasei Co. |
| | | Metal content: 8.2-9.2%; crystallization temp.: 255°C |
| | B4 | Sodium behenate; NS-7 by Nitto Kasei Co. |
| | | Metal content: 6.0-7.0%; crystallization temp.: 119, 178, 255, 259°C |
| | B5 | Lithium behenate; LS-7 by Nitto Kasei Co. |
| | | Metal content: 1.6-2.6%; crystallization temp.: 123, 221°C |
| | B6 | Barium stearate; Ba-St P by Nitto Kasei Co. |
| | | Metal content: 19.5-20.5%; crystallization temp.: 148°C |
| | B7 | Sodium stearate by Nitto Kasei Co. |
| | | Metal content: 7.0-8.5%; crystallization temp.: 125, 180, 253°C |
| | B8 | Calcium stearate by Fujifilm Wako Pure Chemical Corp. |
| | | Crystallization temp.: 163°C |
| | B9 | Sodium benzoate by Fujifilm Wako Pure Chemical Corp. |
| | | No crystallization temperature peak |
| Other nucleating agent | BX1 | Ionomer resin |
| | | Himilan 1707 by DuPont-Mitsui Polychemicals Co. |
| | BX2 | Talc |
| | | Micron White 5000S by Hayashi Kasei Co. |

**[Table 2]**

| | | |
|---|---|---|
| (C) CB/MB | C1 | Carbon black master batch |
| | | Carbon black particle diameter: 24 nm; |
| | | DBP oil absorption amount: 66 cm³/100 g |
| | | Carbon black/PET (mass ratio)=30/70, PET: Novapet PBK1 |
| (D) Glass fibers | D1 | Glass fibers having circular cross section; |
| | | T187H by Nippon Electric Glass Co. |
| | | Fiber diameter: 11 *µ*m; number average fiber length: 3.0 mm |
| (E) Water-repelling agent | E1 | Silicone water-repelling agent |
| | | MB25-502 by DuPont Toray Specialty Materials |
| | | Low density polyethylene base master batch containing 25% silicone |
| | | Critical surface tension: 24 mN/m |
| | E2 | Polytetrafluoroethylene |
| | | TF1750 by 3M; critical surface tension: 18.5 mN/m |
| | | Average particle diameter (D[3,2]): 19.6 *µ*m |
| | | Produced by suspension polymerization |
| | E3 | Polytetrafluoroethylene |
| | | M12 by Daikin Industries.; critical surface tension: 18.5 mN/m |
| | | Average particle diameter (D[3,2]): 37.2 *µ*m |
| | | Produced by suspension polymerization |
| | E4 | Polytetrafluoroethylene |
| | | Lubron L5 by Daikin Industries; critical surface tension:18.5 mN/m |
| | | Average particle diameter (D[3,2]): 14.6 *µ*m |
| | | Produced by emulsion polymerization |
| | E5 | Polytetrafluoroethylene |
| | | FA500H by Daikin Industries; critical surface tension: 18.5 mN/m |
| | | Average particle diameter (D[3,2]): 265.8 *µ*m |
| | | Produced by emulsion polymerization |
| (F) Epoxy compound | F1 | Bisphenol A epoxy compound |
| | | EP-17 by Adeka |
| | | Epoxy equivalent weight: 185 g/eq; molecular weight: 370 |
| (G) Stabilizer | G1 | Hindered phenol antioxidant |
| | | Irganox 1010 by BASF |
| | G2 | 3,9-bis(2,6-di-tert-butyl-4-methylphenoxy)-2,4,8,10-tetraoxa-3,9-diphosphaspiro[5.5]undecane Adekastab PEP-36 by Adeka |
| (H)Mold-release agent | H1 | Ethylene bisstearamde mold-release agent |
| | | Light Amide WH255 by Kyoeisha Chemical Co. |
| | H2 | Montanic acid ester wax |
| | | Licowax E by Clariant; melting point: 80° C |

### (Examples 1 to 21 and Comparative Examples 1 to 9)

### [Production of polyethylene terephthalate resin composition pellets]

Of the components listed in Tables 1 and 2 above, components other than the glass fibers were blended at proportions (mass ratios) shown in Tables 3 to 6, homogeneously mixed for 20 minutes using a tumbler mixer, and supplied to "TEX30α" twin screw extruder produced by Japan Steel Works, Ltd., after which the glass fibers were side fed to the molten resin in the twin screw extruder at proportions shown in Tables 3 to 6 from a position part way along the twin screw extruder. In addition, one vacuum vent was disposed on both the upstream side and downstream side of the side feeder of the extruder, and venting was carried out from these vacuum vents at a degree of vacuum of -0.08 MPa (gauge pressure).

Pellets of polyethylene terephthalate resin composition were obtained by kneading at a screw rotation speed of 300 rpm and a barrel temperature of 280°C, extruding a molten resin in the form of a strand, rapidly cooling the strand in a water bath, and then pelletizing using a pelletizer.

### (Example 22)

### [Production of polyethylene terephthalate resin composition pellets]

Of the components listed in Tables 1 and 2 above, components other than the glass fibers were blended at proportions (mass ratios) shown in Table 5, homogeneously mixed for 20 minutes using a tumbler mixer, and supplied to "TEX30α" twin screw extruder produced by Japan Steel Works, Ltd., after which the glass fibers were side fed to the molten resin in the twin screw extruder at proportions shown in Table 5 from a position part way along the twin screw extruder. In addition, one vacuum vent was disposed on both the upstream side and downstream side of the side feeder of the extruder, the vent on the upstream side was released (gauge pressure: 0 MPa) and venting was carried out from the vacuum vent on the downstream side at a degree of vacuum of -0.08 MPa (gauge pressure).

Pellets of polyethylene terephthalate resin composition were obtained by kneading at screw rotation speed of 300 rpm and barrel temperature of 280°C, extruding molten resin in the form of strand, rapidly cooling the strand in a water bath, and then pelletizing using a pelletizer.

### [Mold release properties by box-type mold: maximum mold release resistance]

The obtained pellets were dried for 5 hours at a temperature of 130°C and molded into a box-type molded article having a wall thickness of 1.5 mm and outer dimensions of 30 × 50 × 15 mm and having a textured surface (texturing height 15 µm) using an injection molding machine produced by Japan Steel Works, Ltd. (mold clamping force: 50 T) at a cylinder temperature of 290°C, a die temperature of 143°C and a cooling time of 20 seconds, and the maximum mold resistance (units: MPa) when the molded article was released by being pushed out by ejector pins was evaluated as the release resistance value. A maximum mold resistance of 10 MPa or less can be assessed as a level at which no problems occur when an actual product is formed.

### [Tensile strength]

The obtained resin composition pellets were dried for 5 hours at 130°C, and then injection molded into ISO multipurpose test pieces (thickness 4 mm) using an injection molding machine (a J-85AD-60H produced by Nissei Plastic Industrial Co., Ltd.) at a cylinder temperature of 280°C and a mold temperature of 140°C.

The tensile strength (units: MPa) of the thus obtained ISO multipurpose test pieces were measured in accordance with ISO 527-1 and ISO 527-2.

### [Tensile strength after hydrolysis treatment]

Tensile strength (units: MPa) was measured after the thus obtained ISO multipurpose test pieces (thickness 4 mm) were subjected to a wet heat test in accordance with JIS K7161 after being treated for 25 hours at a temperature of 121°C, a pressure of 2 atm and a relative humidity of 100% RH using a highly accelerated stress tester (a PC-R8D produced by Hirayama Manufacturing Corporation).

This tensile strength was evaluated and assessed using two grades A and B below.
A: The tensile strength following hydrolysis treatment was 67 MPa or more
B: The tensile strength following hydrolysis treatment was less than 67 MPa

### [Notched Charpy impact strength (units: kJ/m²)]

After drying the obtained pellets for 5 hours at 130°C, ISO multipurpose test pieces (having thicknesses of 4 mm) were injection molded using an injection molding machine (a J-85AD-60H produced by Japan Steel Works, Ltd.) at a cylinder temperature of 280°C and a mold temperature of 140°C. Next, in accordance with ISO 179, test pieces for a notched Charpy impact strength were prepared from the obtained multipurpose test pieces, and notched Charpy impact strength was measured at normal temperature (23°C).

Evaluation and assessment were conducted using two grades as follows: a high notched Charpy impact strength of 9 kJ/m² or more being evaluated as "A"; and a low notched Charpy impact strength of less than 9 kJ/m² being evaluated as "B".

### [Un-notched Charpy impact strength (units: kJ/m²)]

After drying the obtained pellets for 5 hours at 130°C, ISO multipurpose test pieces (having thicknesses of 4 mm) were injection molded using an injection molding machine (a J-85AD-60H produced by Japan Steel Works, Ltd.) at a cylinder temperature of 280°C and a mold temperature of 140°C. Next, in accordance with ISO 179, test pieces for an un-notched Charpy impact strength were prepared from the obtained multipurpose test pieces, and un-notched Charpy impact strength was measured at normal temperature (23°C).

Evaluation and assessment were conducted using two grades as follows: a high un-notched Charpy impact strength of 44 kJ/m² or more being evaluated as "A"; and a low un-notched Charpy impact strength of less than 44 kJ/m² being evaluated as "B".

### [Discoloration (ΔE*) following weather resistance test]

The obtained pellets were dried for 5 hours at 130°C and then injection molded into textured test pieces (sheets having a length of 60 mm, a width of 60 mm and a thickness of 2 mm and having a texturing height of 15 µm) at a cylinder temperature of 280°C using a "J-100AD-60H" injection molding machine produced by Japan Steel Works, Ltd. Using a "Sunshine Weather Tester" produced by Suga Test Instruments Co., Ltd., the test pieces were placed with the textured surface outwards, subjected to one cycle (2 hours) in which rain fell continuously for 18 minutes in 120 minutes at a black panel temperature of 63°C, and then removed after a prescribed period of time. The color difference (ΔE*) of the test piece before and after the light resistance test on the basis of the SCI method was measured using a photometer color difference meter (a CM-3600d produced by Konica Minolta, Inc.) and evaluated using the formula below.$Δ E * = {\left({\left(ΔL*\right)}^{2}+{\left(Δa*\right)}^{2}+{\left(Δb*\right)}^{2}\right)}^{1 / 2}$

As the value of ΔE* decreases, discoloration decreases and thermal discoloration resistance improves, and this was evaluated and assessed using the criteria shown below.

Evaluations and assessments were carried out using three grades A to C below.
A: The value of ΔE* following the weather resistance test was 8.5 or less
B: The value of ΔE* was more than 8.5 and less than 9.0
C: The value of ΔE* was 9 or more

### [Surface condition following weather resistance test]

The surface condition of a test piece following the weather resistance test was observed by eye, compared with that of the test piece before the weather resistance test, and evaluated and assessed using the criteria shown below.

Evaluations and assessments were carried out using three grades A to C below.
A: There was little discoloration and glass fiber floating on the surface did not appear
B: There was little discoloration, but the amount of glass fiber floating was higher than before the weather resistance test
C: There was significant discoloration

### [Measurement of crystallization temperature using DSC]

The crystallization temperature of the polyethylene terephthalate resin composition was measured in accordance with JIS K7121 using a differential scanning calorimetric (DSC) measurement machine. The temperature was increased from 40°C to 300°C at a temperature increase rate of 20°C/min in a nitrogen atmosphere, a temperature of 300°C was maintained for 3 minutes, and the temperature was then lowered to 40°C at a temperature decrease rate of 20°C/min. The crystallization temperature Tc was determined as the temperature of the largest peak attributable to crystallization during temperature increase. The melting point Tm was determined from the peak at the time of melting. A "DSC7020" produced by Hitachi High-Technologies was used as the differential scanning calorimetric measurement apparatus.

### [Water repellency]

The obtained pellets were dried for 5 hours at 130°C and then injection molded into test pieces (test pieces having a length of 60 mm, a width of 60 mm and a thickness of 2 mm, and having a smooth surface) at a cylinder temperature of 280°C using a "J-100AD-60H" injection molding machine produced by Japan Steel Works, Ltd. The molded article was conditioned by being left for 24 hours in a chamber having a temperature of 23°C and a relative humidity of 60% RH, and the contact angle was measured after dripping 1 µL of pure water using a contact angle meter (Drop Master DM500 produced by Kyowa Interface Science Co., Ltd.).

### [Appearance of molded article]

The obtained pellets were dried for 5 hours at 130°C and then injection molded into textured test pieces (sheets having a length of 60 mm, a width of 60 mm and a thickness of 2 mm and having a texturing height of 15 µm) at a cylinder temperature of 280°C using a "J-100AD-60H" injection molding machine produced by Japan Steel Works, Ltd. The textured surface of the molded article was observed, and texture transfer properties were assessed.

Evaluations and assessments were carried out using three grades A to C below.
A: All textures were transferred, and there were no ejector pin traces
B: All textures were transferred, but there were ejector pin traces
C: Some textures appeared crushed, and the surface was glossy or there were ejector pin traces

### [Overall evaluation]

An overall evaluation was carried out using evaluation results for three items, i.e., notched Charpy impact strength, discoloration following weather resistance test and surface condition following weather resistance test, and evaluations and assessments were carried out using five grades A to E below.
A: Three A grades
B: Discoloration following weather resistance test and surface condition following weather resistance were both evaluated as grade A, but notched Charpy impact strength was evaluated as grade B
C: One of discoloration following weather resistance test and surface condition following weather resistance was evaluated as grade A but the other was evaluated as grade B
D: One A grade and two C grades
E: No A grades

The results are shown in Table 3 and ensuing tables.

**[Table 3]**

| | | Example | | | | | | | |
|---|---|---|---|---|---|---|---|---|---|
| | | 1 | 2 | 3 | 4 | 5 | 6 | 7 | 8 |
| PET | A1 | 100 | 100 | 100 | 100 | 100 | 100 | 100 | |
| | A2 | | | | | | | | 100 |
| Carboxylic acid alkali salt | B1 | 0.4 | 0.4 | 0.4 | 0.4 | 0.4 | 0.4 | 0.4 | 0.4 |
| | B2 | | | | | | | | |
| | B3 | | | | | | | | |
| | B4 | | | | | | | | |
| | B5 | | | | | | | | |
| | B6 | | | | | | | | |
| | B7 | | | | | | | | |
| | B8 | | | | | | | | |
| | B9 | | | | | | | | |
| Other nucleating agent | BX1 | | | | | | | | |
| | BX2 | | | | | | | | |
| CB/MB | C1 | 2.8 | 2.8 | 2.9 | 2.8 | 2.8 | 2.8 | 3.0 | 2.8 |
| Glass fibers | D1 | 85 | 85 | 86 | 85 | 85 | 85 | 91 | 85 |
| Water-repelling agent | E1 | | | | | | | 0.1 | |
| | E2 | 0.1 | 0.2 | 0.1 | | | | | 0.1 |
| | E3 | | | | 0.1 | | | | |
| | E4 | | | | | 0.1 | | | |
| | E5 | | | | | | 0.1 | | |
| Epoxy compound | F1 | | | 0.8 | | | | | |
| Stabilizer | G1 | 0.2 | 0.2 | 0.2 | 0.2 | 0.2 | 0.2 | 0.2 | 0.2 |
| | G2 | 0.2 | 0.2 | 0.2 | 0.2 | 0.2 | 0.2 | 0.2 | 0.2 |
| Mold-release agent | H1 | 0.6 | 0.6 | 0.6 | 0.6 | 0.6 | 0.6 | 0.6 | 0.6 |
| | H2 | | | | | | | | |
| Number of vents | | 2 | 2 | 2 | 2 | 2 | 2 | 2 | 2 |
| Crystallization temperature (°C) | | 208 | - | - | - | - | - | - | - |
| Mold release resistance (MPa) | | - | - | - | - | - | - | - | - |
| Water droplet contact angle (°) | | 112 | - | - | - | - | - | - | - |
| Tensile strength (MPa) | | 175 | - | 188 | - | - | - | - | - |
| Tensile strength (MPa) following hydrolysis treatment | | 74 | - | - | - | - | - | - | - |
| Assessment | | A | - | - | - | - | - | - | - |
| Notched Charpy impact strength (kJ/m²) | | 9.9 | 9.3 | 9.2 | 10.0 | 9.8 | 9.7 | 9.4 | 9.1 |
| Assessment | | A | A | A | A | A | A | A | A |
| Un-notched Charpy impact strength (kJ/m²) | | 46 | - | - | - | - | - | - | - |
| Assessment | | A | - | - | - | - | - | - | - |
| Appearance of molded article | | A | - | - | - | - | - | - | - |
| ΔE* | | 7.7 | 6.9 | 8.5 | 8.4 | 8.4 | 8.4 | 8.4 | 7.4 |
| Assessment | | A | A | A | A | A | A | A | A |
| Surface condition following weather resistance test | | A | A | A | A | A | A | A | A |
| Overall evaluation | | A | A | A | A | A | A | A | A |

**[Table 4]**

| | | Example | | | | | | | |
|---|---|---|---|---|---|---|---|---|---|
| | | 9 | 10 | 11 | 12 | 13 | 14 | 15 | 16 |
| PET | A1 | 100 | 100 | 100 | 100 | 100 | 100 | 100 | 100 |
| | A2 | | | | | | | | |
| Carboxylic acid alkali salt | B1 | | | | | | | | |
| | B2 | 0.4 | | | | | | | |
| | B3 | | 0.4 | | | | | | |
| | B4 | | | 0.4 | | | | | |
| | B5 | | | | 0.4 | | | | |
| | B6 | | | | | 0.4 | | | |
| | B7 | | | | | | 0.4 | | |
| | B8 | | | | | | | 0.4 | |
| | B9 | | | | | | | | 0.4 |
| Other nucleating agent | BX1 | | | | | | | | |
| | BX2 | | | | | | | | |
| CB/MB | C1 | 2.8 | 2.8 | 2.8 | 2.8 | 2.8 | 2.8 | 2.8 | 2.8 |
| Glass fibers | D1 | 85 | 85 | 85 | 85 | 85 | 85 | 85 | 85 |
| Water-repelling agent | E1 | | | | | | | | |
| | E2 | 0.1 | 0.1 | 0.1 | 0.1 | 0.1 | 0.1 | 0.1 | 0.1 |
| | E3 | | | | | | | | |
| | E4 | | | | | | | | |
| | E5 | | | | | | | | |
| Epoxy compound | F1 | | | | | | | | |
| Stabilizer | G1 | 0.2 | 0.2 | 0.2 | 0.2 | 0.2 | 0.2 | 0.2 | 0.2 |
| | G2 | 0.2 | 0.2 | 0.2 | 0.2 | 0.2 | 0.2 | 0.2 | 0.2 |
| Mold-release agent | H1 | 0.6 | 0.6 | 0.6 | 0.6 | 0.6 | 0.6 | 0.6 | 0.6 |
| | H2 | | | | | | | | |
| Number of vents | | 2 | 2 | 2 | 2 | 2 | 2 | 2 | 2 |
| Crystallization temperature (°C) | | 205 | 205 | 211 | 205 | 207 | 211 | 204 | 212 |
| Mold release resistance (MPa) | | - | - | - | - | - | - | - | - |
| Water droplet contact angle (°) | | 119 | 113 | 102 | 97 | 113 | 82 | 98 | 95 |
| Tensile strength (MPa) | | 174 | 174 | 174 | 174 | 174 | 173 | 172 | 173 |
| Tensile strength (MPa) following hydrolysis treatment | | 69 | 73 | 73 | 69 | 76 | 73 | 76 | 68 |
| Assessment | | A | A | A | A | A | A | A | A |
| Notched Charpy impact strength (kJ/m²) | | 9.7 | 9.9 | 9.9 | 9.7 | 9.4 | 9.4 | 9.0 | 9.0 |
| Assessment | | A | A | A | A | A | A | A | A |
| Un-notched Charpy impact strength (kJ/m²) | | 42 | 44 | 45 | 42 | 45 | 49 | 42 | 42 |
| Assessment | | B | A | A | B | A | A | B | B |
| Appearance of molded article | | B | B | C | C | B | C | B | B |
| Δ E* | | 7.9 | 7.8 | 8.2 | 8.1 | 8.3 | 8.2 | 7.9 | 8.1 |
| Assessment | | A | A | A | A | A | A | A | A |
| Surface condition following weather resistance test | | A | A | A | A | A | A | A | A |
| Overall evaluation | | A | A | A | A | A | A | A | A |

**[Table 5]**

| | | Example | | | | | |
|---|---|---|---|---|---|---|---|
| | | 17 | 18 | 19 | 20 | 21 | 22 |
| PET | A1 | 100 | 100 | 100 | 100 | 100 | 100 |
| | A2 | | | | | | |
| Carboxylic acid alkali salt | B1 | 0.4 | 0.4 | 0.8 | | | 0.4 |
| | B2 | | | | | | |
| | B3 | | | | | | |
| | B4 | | | | | | |
| | B5 | | | | | | |
| | B6 | | | | | | |
| | B7 | | | | 0.4 | 0.4 | |
| | B8 | | | | | | |
| | B9 | | | | | | |
| Other nucleating agent | BX1 | | | | | | |
| | BX2 | | | | | | |
| CB/MB | C1 | 2.8 | 2.8 | 2.8 | 2.8 | 2.8 | 2.8 |
| Glass fibers | D1 | 85 | 85 | 85 | 85 | 85 | 85 |
| Water-repelling agent | E1 | | | | | | |
| | E2 | 0.6 | 0.4 | 0.1 | 0.6 | 0.4 | 0.1 |
| | E3 | | | | | | |
| | E4 | | | | | | |
| | E5 | | | | | | |
| Epoxy compound | F1 | | | | | | |
| Stabilizer | G1 | 0.2 | 0.2 | 0.2 | 0.2 | 0.2 | 0.2 |
| | G2 | 0.2 | 0.2 | 0.2 | 0.2 | 0.2 | 0.2 |
| Mold-release agent | H1 | 0.6 | 0.6 | 0.6 | 0.6 | 0.6 | 0.6 |
| | H2 | | | | | | |
| Number of vents | | 2 | 2 | 2 | 2 | 2 | 1 |
| Crystallization temp. (°C) | | 209 | 211 | 212 | 210 | 211 | - |
| Mold release resistance (MPa) | | - | - | - | - | - | - |
| Water droplet contact angle (°) | | 99 | 109 | 86 | 89 | 92 | - |
| Tensile strength (MPa) | | 176 | 176 | 176 | 176 | 174 | - |
| Tensile strength (MPa) following hydrolysis treatment | | 72 | 72 | 66 | 71 | 72 | - |
| Assessment | | A | A | B | A | A | - |
| Notched Charpy impact strength (kJ/m²) | | 9.7 | 9.7 | 9.7 | 9.3 | 9.5 | 8.4 |
| Assessment | | A | A | A | A | A | B |
| Un-notched Charpy impact strength (kJ/m²) | | 46 | 44 | 46 | 41 | 47 | - |
| Assessment | | A | A | A | B | A | - |
| Appearance of molded article | | C | A | C | C | C | - |
| ΔE* | | 8.4 | 8.1 | 8.2 | 8.4 | 8.3 | 7.7 |
| Assessment | | A | A | A | A | A | A |
| Surface condition following weather resistance test | | A | A | A | A | A | A |
| Overall evaluation | | A | A | A | A | A | B |

**[Table 6]**

| | | Comparative Example | | | | | | | | |
|---|---|---|---|---|---|---|---|---|---|---|
| | | 1 | 2 | 3 | 4 | 5 | 6 | 7 | 8 | 9 |
| PET | A1 | 100 | 100 | 100 | 100 | 100 | 100 | 100 | 100 | 100 |
| | A2 | | | | | | | | | |
| Carboxylic acid alkali salt | B1 | | | | | 0.4 | | 0.4 | 0.4 | 0.4 |
| | B2 | | | | | | | | | |
| | B3 | | | | | | | | | |
| | B4 | | | | | | | | | |
| | B5 | | | | | | | | | |
| | B6 | | | | | | | | | |
| | B7 | | | | | | | | | |
| | B8 | | | | | | | | | |
| | B9 | | | | | | | | | |
| Other nucleating agent | BX1 | 0.4 | | 0.4 | | | 0.3 | | | |
| | BX2 | | 2.9 | | 3.0 | | | | | |
| CB/MB | C1 | 2.8 | 2.9 | 7.1 | 7.3 | 7.1 | 5.5 | 2.8 | 1.7 | 1.7 |
| Glass fibers | D1 | 85 | 87 | 89 | 91 | 89 | 46 | 85 | 84 | 84 |
| Water-repelling agent | E1 | | | | | | | | | |
| | E2 | | | | | | | | | |
| | E3 | | | | | | | | | |
| | E4 | | | | | | | | | |
| | E5 | | | | | | | | | |
| Epoxy compound | F1 | | | | | | | | | |
| Stabilizer | G1 | 0.2 | 0.2 | 0.2 | 0.2 | 0.2 | 0.2 | 0.2 | 0.2 | 0.2 |
| | G2 | 0.2 | 0.2 | 0.2 | 0.2 | 0.2 | 0.2 | 0.2 | 0.2 | 0.2 |
| Mold-release agent | H1 | 0.6 | 0.6 | 0.6 | 0.6 | 0.6 | 0.5 | 0.6 | 0.6 | |
| | H2 | | | | | | | | | 0.6 |
| Number of vents | | 2 | 2 | 2 | 2 | 2 | 2 | 2 | 2 | 2 |
| Crystallization temperature (°C) | | - | - | - | - | - | - | - | - | - |
| Mold release resistance (MPa) | | - | - | - | - | - | - | - | 4 | 5 |
| Water droplet contact angle (°) | | - | - | - | - | - | - | 77 | - | - |
| Tensile strength (MPa) | | - | - | - | - | - | - | - | - | - |
| Tensile strength (MPa) following hydrolysis treatment | | - | - | - | - | - | - | - | - | - |
| Assessment | | - | - | - | - | - | - | - | - | - |
| Notched Charpy impact strength (kJ/m²) | | 8.1 | 8.3 | 8.1 | 8.3 | 9.0 | 8.0 | 9.7 | 9.3 | 9.4 |
| Assessment | | B | B | B | B | A | B | A | A | A |
| Un-notched Charpy impact strength (kJ/m²) | | - | - | - | - | - | - | - | - | - |
| Assessment | | - | - | - | - | - | - | - | - | - |
| Appearance of molded article | | - | - | - | - | - | - | - | - | - |
| ΔE* | | 11.0 | 10.3 | 12.0 | 11.7 | 9.7 | 12.0 | 8.8 | 6.4 | 8.7 |
| Assessment | | C | C | C | C | C | C | B | A | B |
| Surface condition following weather resistance test | | C | C | C | C | C | C | A | B | A |
| Overall evaluation | | E | E | E | E | D | E | C | C | C |

### [Industrial Applicability]

The polyethylene terephthalate resin composition of the present invention exhibits excellent weather resistance, and can therefore be advantageously used in components used outdoors, and especially exterior components of vehicles, and so on.

## Claims

1. A polyethylene terephthalate resin composition comprising, relative to 100 parts by mass of a polyethylene terephthalate resin (A), 0.1 to 5 parts by mass of a carboxylic acid alkali metal salt (B), 0.1 to 6 parts by mass of carbon black (C), 55 parts by mass or more of glass fibers (D), and 0.01 to 2 parts by mass of a water-repelling agent (E).

2. The polyethylene terephthalate resin composition of claim 1, wherein a mass ratio (E)/(B) of the content of the water-repelling agent (E) relative to the content of the carboxylic acid alkali metal salt (B) is 0.2 to 1.3.

3. The polyethylene terephthalate resin composition of claim 1 or claim 2, wherein a critical surface tension of the water-repelling agent (E), which is determined as described in the description, is 40 mN/m or less.

4. The polyethylene terephthalate resin composition of any one of claims 1 to 3, wherein the water-repelling agent (E) is polytetrafluoroethylene.

5. The polyethylene terephthalate resin composition of any one of claims 1 to 4, wherein the carboxylic acid alkali metal salt (B) is a sodium carboxylate or a montanic acid alkali metal salt, preferably wherein the carboxylic acid alkali metal salt (B) is sodium montanate.

6. The polyethylene terephthalate resin composition of any one of claims 1 to 5, further comprising, relative to 100 parts by mass of the polyethylene terephthalate resin (A), 0.1 to 3 parts by mass of a mold-release agent.

7. The polyethylene terephthalate resin composition of claim 6, wherein the mold-release agent is a polyolefin compound or an aliphatic carboxylic acid amide, preferably wherein the mold-release agent is an aliphatic carboxylic acid amide.

8. The polyethylene terephthalate resin composition of any one of claims 1 to 7, wherein a DBP oil absorption amount of the carbon black (C), which is determined as described in the description, is 40 to 80 cm³/100 g,
wherein DBP is dibutyl phthalate.

9. The polyethylene terephthalate resin composition of any one of claims 1 to 8, further comprising, relative to 100 parts by mass of the polyethylene terephthalate resin (A), 0.1 to 4 parts by mass of an epoxy compound.

10. The polyethylene terephthalate resin composition of claim 9, wherein the epoxy compound is a bisphenol A type epoxy compound.

11. A molded article comprising the polyethylene terephthalate resin composition of any of claims 1 to 10.

12. The molded article of claim 11, wherein a contact angle with water on a surface of the molded article, which is determined as described in the description, is 80° or more.

13. Use of the molded article of claim 11 or 12 for a product used outdoors.

14. A method for producing the polyethylene terephthalate resin composition of any one of claims 1 to 10, the method comprising a step for blending the polyethylene terephthalate resin (A) with a coloring agent composition that contains the polyethylene terephthalate resin (A) and the carbon black (C).

15. A method for producing a polyethylene terephthalate resin composition, the method comprising producing the polyethylene terephthalate resin composition of any one of claims 1 to 10 by using an extruder, wherein the extruder has two or more vents.

## Patentansprüche

1. Eine Polyethylenterephthalat-Harzzusammensetzung, umfassend, bezogen auf 100 Massenteile eines Polyethylenterephthalat-Harzes (A), 0,1 bis 5 Massenteile eines Alkalimetallsalzes einer Carbonsäure (B), 0,1 bis 6 Massenteile Ruß (C), 55 Massenteile oder mehr Glasfasern (D) und 0,01 bis 2 Massenteile eines wasserabweisenden Mittels (E).

2. Die Polyethylenterephthalat-Harzzusammensetzung nach Anspruch 1, wobei ein Massenverhältnis (E)/(B) des Gehalts des wasserabweisenden Mittels (E), bezogen auf den Gehalt des Alkalimetallsalzes einer Carbonsäure (B), 0,2 bis 1,3 beträgt.

3. Die Polyethylenterephthalat-Harzzusammensetzung nach Anspruch 1 oder Anspruch 2, wobei eine kritische Oberflächenspannung des wasserabweisenden Mittels (E), die wie in der Beschreibung beschrieben bestimmt wird, 40 mN/m oder weniger beträgt.

4. Die Polyethylenterephthalat-Harzzusammensetzung nach einem der Ansprüche 1 bis 3, wobei das wasserabweisende Mittel (E) Polytetrafluorethylen ist.

5. Die Polyethylenterephthalat-Harzzusammensetzung nach einem der Ansprüche 1 bis 4, wobei das Alkalimetallsalz einer Carbonsäure (B) ein Natriumcarboxylat oder ein Alkalimetallsalz von Montansäure ist, vorzugsweise wobei das Alkalimetallsalz einer Carbonsäure (B) Natriummontanat ist.

6. Die Polyethylenterephthalat-Harzzusammensetzung nach einem der Ansprüche 1 bis 5, ferner umfassend, bezogen auf 100 Massenteile des Polyethylenterephthalat-Harzes (A), 0,1 bis 3 Massenteile eines Formtrennmittels.

7. Die Polyethylenterephthalat-Harzzusammensetzung nach Anspruch 6, wobei das Formtrennmittel eine Polyolefinverbindung oder ein aliphatisches Carbonsäureamid ist, vorzugsweise wobei das Formtrennmittel ein aliphatisches Carbonsäureamid ist.

8. Die Polyethylenterephthalat-Harzzusammensetzung nach einem der Ansprüche 1 bis 7, wobei eine DBP-Ölabsorptionsmenge des Rußes (C), die wie in der Beschreibung beschrieben bestimmt wird, 40 bis 80 cm³/100 g beträgt, wobei DBP Dibutylphthalat ist.

9. Die Polyethylenterephthalat-Harzzusammensetzung nach einem der Ansprüche 1 bis 8, ferner umfassend, bezogen auf 100 Massenteile des Polyethylenterephthalat-Harzes (A), 0,1 bis 4 Massenteile einer Epoxidverbindung.

10. Die Polyethylenterephthalat-Harzzusammensetzung nach Anspruch 9, wobei die Epoxidverbindung eine Epoxidverbindung vom Bisphenol-A-Typ ist.

11. Ein Formgegenstand, umfassend die Polyethylenterephthalat-Harzzusammensetzung nach einem der Ansprüche 1 bis 10.

12. Der Formgegenstand nach Anspruch 11, wobei ein Kontaktwinkel mit Wasser auf einer Oberfläche des Formgegenstands, der wie in der Beschreibung beschrieben bestimmt wird, 80° oder mehr beträgt.

13. Verwendung des Formgegenstands nach Anspruch 11 oder 12 für ein im Außenbereich verwendetes Produkt.

14. Ein Verfahren zur Herstellung der Polyethylenterephthalat-Harzzusammensetzung nach einem der Ansprüche 1 bis 10, wobei das Verfahren einen Schritt zum Mischen des Polyethylenterephthalat-Harzes (A) mit einer Farbstoffzusammensetzung, die das Polyethylenterephthalat-Harz (A) und den Ruß (C) enthält, umfasst.

15. Ein Verfahren zur Herstellung einer Polyethylenterephthalat-Harzzusammensetzung, wobei das Verfahren das Herstellen der Polyethylenterephthalat-Harzzusammensetzung nach einem der Ansprüche 1 bis 10 unter Verwendung eines Extruders umfasst, wobei der Extruder zwei oder mehr Entlüftungen aufweist.

## Revendications

1. Composition de résine de poly(téréphtalate d'éthylène) comprenant, par rapport à 100 parties en masse d'une résine de poly(téréphtalate d'éthylène) (A), 0,1 à 5 parties en masse d'un sel de métal alcalin d'acide carboxylique (B), 0,1 à 6 parties en masse de noir de carbone (C), 55 parties en masse ou plus de fibres de verre (D), et 0,01 à 2 parties en masse d'un agent hydrofuge (E).

2. Composition de résine de poly(téréphtalate d'éthylène) selon la revendication 1, dans laquelle le rapport en masse (E)/(B) de la teneur en agent hydrofuge (E) à la teneur en sel de métal alcalin d'acide carboxylique (B) est de 0,2 à 1,3.

3. Composition de résine de poly(téréphtalate d'éthylène) selon la revendication 1 ou la revendication 2, dans laquelle la tension de surface critique de l'agent hydrofuge (E), qui est déterminée comme décrit dans la description, est de 40 mN/m ou moins.

4. Composition de résine de poly(téréphtalate d'éthylène) selon l'une quelconque des revendications 1 à 3, dans laquelle l'agent hydrofuge (E) est le polytétrafluoroéthylène.

5. Composition de résine de poly(téréphtalate d'éthylène) selon l'une quelconque des revendications 1 à 4, dans laquelle le sel de métal alcalin d'acide carboxylique (B) est un carboxylate de sodium ou un sel de métal alcalin d'acide montanique, de préférence dans laquelle le sel de métal alcalin d'acide carboxylique (B) est le montanate de sodium.

6. Composition de résine de poly(téréphtalate d'éthylène) selon l'une quelconque des revendications 1 à 5, comprenant en outre, par rapport à 100 parties en masse de la résine de poly(téréphtalate d'éthylène) (A), 0,1 à 3 parties en masse d'un agent de démoulage.

7. Composition de résine de poly(téréphtalate d'éthylène) selon la revendication 6, dans laquelle l'agent de démoulage est un composé polyoléfine ou un amide d'acide carboxylique aliphatique, de préférence dans laquelle l'agent de démoulage est un amide d'acide carboxylique aliphatique.

8. Composition de résine de poly(téréphtalate d'éthylène) selon l'une quelconque des revendications 1 à 7, dans laquelle la quantité d'absorption d'huile DBP du noir de carbone (C), qui est déterminée comme décrit dans la description, est de 40 à 80 cm³/100 g,
dans laquelle le DBP est le phtalate de dibutyle.

9. Composition de résine de poly(téréphtalate d'éthylène) selon l'une quelconque des revendications 1 à 8, comprenant en outre, par rapport à 100 parties en masse de la résine de poly(téréphtalate d'éthylène) (A), 0,1 à 4 parties en masse d'un composé époxy.

10. Composition de résine de poly(téréphtalate d'éthylène) selon la revendication 9, dans laquelle le composé époxy est un composé époxy de type bisphénol A.

11. Article moulé comprenant la composition de résine de poly(téréphtalate d'éthylène) selon l'une quelconque des revendications 1 à 10.

12. Article moulé selon la revendication 11, dans lequel l'angle de contact avec l'eau sur une surface de l'article moulé, qui est déterminé comme décrit dans la description, est de 80° ou plus.

13. Utilisation de l'article moulé selon la revendication 11 ou 12 pour un produit utilisé en extérieur.

14. Méthode pour produire la composition de résine de poly(téréphtalate d'éthylène) selon l'une quelconque des revendications 1 à 10, la méthode comprenant une étape pour mélanger la résine de poly(téréphtalate d'éthylène) (A) avec une composition d'agent colorant qui contient la résine de poly(téréphtalate d'éthylène) (A) et le noir de carbone (C).

15. Méthode pour produire une composition de résine de poly(téréphtalate d'éthylène), la méthode comprenant la production de la composition de résine de poly(téréphtalate d'éthylène) selon l'une quelconque des revendications 1 à 10 en utilisant une extrudeuse, dans laquelle l'extrudeuse a deux évents ou plus.
